# EUROPEAN PATENT APPLICATION

(11) **EP 4 808 241 A1**
(43) Date of publication of application: **16.09.2026**
(21) Application number: 24895577.5
(22) Date of filing: 20.06.2024
(51) Int. Cl.: H04W 72/0453

(54) **CARRIER CONFIGURATION METHOD AND APPARATUS, AND STORAGE MEDIUM**

(30) Priority: 29.11.2023 CN 202311627849
(71) Applicant: ZTE Corporation, Shenzhen, Guangdong 518057 (CN)
(72) Inventor: REN, Min, Shenzhen, Guangdong 518057 (CN); SHI, Jing, Shenzhen, Guangdong 518057 (CN); HAN, Xianghui, Shenzhen, Guangdong 518057 (CN); GOU, Wei, Shenzhen, Guangdong 518057 (CN)
(74) Representative: Ziebig Hengelhaupt Intellectual Property Attorneys Patentanwaltskanzlei PartGmbB
(86) International application number: PCT/CN2024/100261
(87) International publication number: WO 2025/112474

(57) **Abstract**

Provided are a carrier configuration method and apparatus, and a storage medium. A system message sending method comprises: a first node receives configuration signaling sent by a second node, wherein the configuration signaling is used for determining configuration information of a carrier combination; and on the basis of the configuration information of the carrier combination, the first node and the second node perform multi-carrier communication.

## Description

The present disclosure claims priority to Chinese Patent Application No. 202311627849.7, filed on November 29, 2023, which is hereby incorporated by reference in its entirety.

### TECHNICAL FIELD

The present disclosure relates to the technical field of communications, and in particular, to a carrier configuration method and apparatus, and a storage medium.

### BACKGROUND

In the current carrier aggregation (CA) technology of mobile communication systems, as a channel state changes, in order to match a current transmission service, the network side may configure and re-configure a carrier combination only through a radio resource control (RRC) layer, and indicate an activation or deactivation of a secondary carrier/secondary cell (Scell) through a medium access control-control element (MAC-CE).

### SUMMARY

In an aspect, a carrier configuration method is provided, which is applied to a first node. The carrier configuration method includes:
receiving a configuration signaling, where the configuration signaling is used to determine configuration information for a carrier combination; and
performing multi-carrier communication based on the configuration information for the carrier combination.

In another aspect, a carrier configuration method is provided, which is applied to a second node. The carrier configuration method includes:
sending a configuration signaling, where the configuration signaling is used to determine configuration information for a carrier combination; and
performing multi-carrier communication based on the configuration information for the carrier combination.

In yet another aspect, a carrier configuration apparatus is provided, which is applied to a first node. The carrier configuration apparatus includes:
a communication module, which is configured to receive a configuration signaling, where the configuration signaling is used to determine configuration information for a carrier combination; and
the communication module is further configured to perform multi-carrier communication based on the configuration information for the carrier combination.

In yet another aspect, a carrier configuration apparatus is provided, which is applied to a second node. The carrier configuration device includes:
a communication module, which is configured to send a configuration signaling, where the configuration signaling is used to determine configuration information for a carrier combination; and
the communication module is further configured to perform multi-carrier communication based on the configuration information for the carrier combination.

In yet another aspect, a communication apparatus is provided. The communication apparatus includes: a memory and a processor, where the memory is coupled to the processor, the memory is configured to store instructions executable for the processor, and the processor is configured, upon the instructions being executed, to perform the carrier configuration method according to any one of the above-mentioned aspects.

In yet another aspect, a computer-readable storage medium is provided. The computer-readable storage medium stores computer program instructions. Upon the computer program instructions being run on a computer (such as a communication apparatus or a carrier configuration apparatus), the carrier configuration method according to any one of the above-mentioned aspects is implemented.

In yet another aspect, a computer program product is provided. The computer program product includes computer program instructions, when the computer program instructions are executed, the carrier configuration method according to any one of the above-mentioned aspects is implemented.

### BRIEF DESCRIPTION OF THE DRAWINGS

FIG. 1 is a schematic diagram of an architecture of a communication system according to some embodiments of the present disclosure.
FIG. 2 is flowchart of interaction for a carrier configuration method according to some embodiments of the present disclosure.
FIG. 3 is a schematic diagram of a carrier combination according to some embodiments of the present disclosure.
FIG. 4 is a schematic diagram of another carrier combination according to some embodiments of the present disclosure.
FIG. 5 is a schematic diagram of yet another carrier combination according to some embodiments of the present disclosure.
FIG. 6 is a schematic diagram of yet another carrier combination according to some embodiments of the present disclosure.
FIG. 7 is a structural schematic diagram of a carrier configuration apparatus according to some embodiments of the present disclosure.
FIG. 8 is a structural schematic diagram of another carrier configuration apparatus according to some embodiments of the present disclosure.
FIG. 9 is a structural schematic diagram of a communication apparatus according to some embodiments of the present disclosure.

### DETAILED DESCRIPTION

In order to enable those skilled in the art to better understand the technical solutions in the present disclosure, the technical solutions in the present disclosure will be described clearly and completely in conjunction with the accompanying drawings of the present disclosure. Obviously, the described embodiments are merely a part of embodiments of the present disclosure, but not all of the embodiments. All other embodiments obtained based on the embodiments of the present disclosure by an ordinary person of those skilled in the art without paying any creative effort shall belong to the protection scope of the present disclosure.

In the description of the present disclosure, unless otherwise specified, "/" means an "or" relationship, for example, "A/B" may represent A or B. The "and/or" herein is merely an association relationship for describing associated objects, and used for indicating that there may be three relationships, for example, A and/or B may represent: only A; only B; or both A and B. In addition, "at least one" means a number of one or more, and "plurality" means a number of two or more. The words, such as "first" and "second" do not limit a quantity or an execution order, and the words such as "first" and "second" do not limit that object are different, either.

It should be noted that in the present disclosure, wordings, such as "exemplarily" or "for example" and variations thereof are used to indicate examples, instances, or illustrations. Any embodiment or design solution described in the present disclosure as "exemplarily" or "for example" should not be illustrated as being more preferred or advantageous over other embodiments or design solutions. Specifically, the usage of the wordings such as "exemplary/exemplarily" or "for example" is intended to present related concepts in a concrete way.

The 4th generation mobile communication technology (4G), Long-Term Evolution Advance (LTE Advance), and the 5th generation mobile communication technology (5G) are facing increasing requirements. Based on current development trends, 4G and 5G systems are developing support for enhanced mobile broadband (eMBB), ultra-reliable low-latency communication (URLLC), and massive machine type communication (mMTC) functionalities. Carrier aggregation (CA) may be used as an effective means for improving cell coverage and user speed in 4G, 5G, and other communication systems.

In the current CA technology of mobile communication systems, as a channel state changes, in order to match a current transmission service, the network side may configure and reconfigure a carrier combination only through a radio resource control (RRC) layer, and indicate an activation or deactivation of a secondary carrier/secondary cell (Scell) through a medium access control-control element (MAC-CE). These semi-static notification methods not only take nearly tens of milliseconds, but also cannot flexibly change the carrier combination, thus unable to match the actual channel state changes.

In view of this, a carrier configuration method is proposed in the present disclosure, in which a first node receives a configuration signaling sent from a second node, and the configuration signaling is used to determine configuration information for a carrier combination; then the first node and the second node perform multi-carrier communication based on the configuration information for carrier combination. In this way, based on different channel states, the second node may send different configuration signals to the first node in a timely manner, so that the first node and the second node are capable of performing the multi-carrier communication based on the configuration information for different carrier combinations determined by different configuration signals, achieving dynamic configuration for carrier combinations, thus to match the actual channel state and improve the communication efficiency.

The carrier configuration method provided in the embodiments of the present disclosure may be applied to systems in various communication standards. For example, the carrier configuration method provided in the embodiments of the present disclosure may be applied to systems including but not limited to a LTE system, various versions of evolved systems based on LTE, a 5G system, etc. In addition, the method for sending and receiving system messages provided in the embodiments of the present disclosure may also be applied to future oriented communication systems (such as a 6G communication system).

A network architecture of the mobile communication network (including but not limited to 3G, 4G, 5G, and future mobile communication networks) in the embodiments of the present disclosure may include at least a first communication node and a second communication node. It should be understood that in this example, the first communication node in a downlink may be a network side device (e.g., including but not limited to a base station), and the second communication node may be a terminal side device (e.g., including but not limited to a terminal). Of course, in an uplink, the first communication node may also be a terminal side device, and the second communication node may also be a network side device. In a case where two communication nodes are in a device-to-device communication, both the first communication node and the second communication node may be base stations or terminals. The first communication node and the second communication node may be referred to as the first node and the second node for short, respectively.

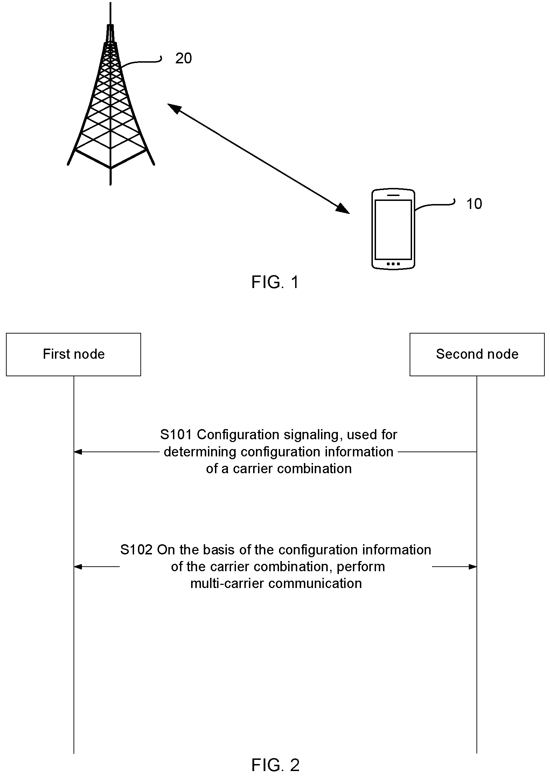

For example, taking the first communication node being a terminal and the second communication node being a base station as an example, as shown in FIG. 1, FIG. 1 is a schematic diagram of an architecture of a communication system provided in the embodiments of the present disclosure, and the communication system includes a terminal 10 and a base station 20. A number of terminal 10 and a number of base station 20 may be one or more, which are not limited herein.

In some embodiments, the base station 20 provides wireless access services to the terminal 10. One base station 20 provides at least one service coverage area (also known as a cell). A terminal 10 entering the area may communicate with the base station 20 via wireless signals to receive wireless access services provided by the base station 20.

In some embodiments, the base station may be a base station or an evolutional node B (eNB or eNodeB) in long term evolution (LTE), long term evolution advanced (LTEA), a base station device in a 5G network, or a base station in a future communication system, etc. The base station may include various macro base stations, micro base stations, home base stations, wireless remote device, reconfigurable intelligent surfaces (RISs), routers, relays, TRPs, wireless fidelity (WIFI) devices, or other network side devices.

In some embodiments, the terminal may be a device with wireless transmission and reception capabilities. The terminal may be a mobile phone, a pad, a computer with wireless transceiver functions, a virtual reality (VR) terminal, an augmented reality (AR) terminal, a wireless terminal in the industrial control, a wireless terminal in self driving, a wireless terminal in a remote medical, a wireless terminal in a smart grid, a wireless terminal in transportation safety, a wireless terminal in smart city, a wireless terminal in smart home, etc. The application scenarios are not limited in the embodiments of the present disclosure. The terminal, sometimes, may also be referred to as a user, a user equipment (UE), an access terminal, a UE unit, a UE station, a mobile station, a mobile platform, a remote station, a remote terminal, a mobile device, a UE terminal, a wireless communication device, a UE agent, a UE apparatus, etc., which is not limited in the embodiments of the present disclosure.

Application scenarios of the embodiments of the present disclosure are not limited. The system architecture and service scenes described in the embodiments of the present disclosure are intended to illustrate the technical solutions of the embodiments of the present disclosure more clearly, and do not constitute a limitation on the technical solutions provided in the embodiments of the present disclosure. A person of ordinary skill in the art may appreciate that with the evolution of network architecture and the emergence of new service scenes, the technical solutions provided in the embodiments of the present disclosure are also applicable to similar technical problems.

A carrier configuration method is provided in the embodiments of the present disclosure. As shown in FIG. 2, the method includes the following S101-S102.

In S101, a first node sends a configuration signaling to the second node. Correspondingly, the first node receives the configuration signaling sent from the second node. The configuration signaling is used to determine configuration information for a carrier combination.

The carrier combination may also have other names, such as carrier aggregation, carrier aggregation combination (referred to as CA combination), which is not limited in the present disclosure.

In some embodiments, the configuration signaling includes downlink control information (DCI). Due to the DCI being a physical layer signaling, comparing to configuring a carrier combination through an RRC signaling (i.e., semi-static configuration), a configuration time of configuring a carrier combination through DCI is shorter, thus enabling flexible configuration of different carrier combinations to adapt to actual channel states.

In some embodiments, the downlink control information indicates an aggregated use for different numbers of carriers.

In some embodiments, the configuration signaling includes a bitmap, the bitmap includes a plurality of indication bits, each indication bit corresponds to a carrier, and each indication bit is used to indicate whether a carrier corresponding to the indication bit belongs to the carrier combination.

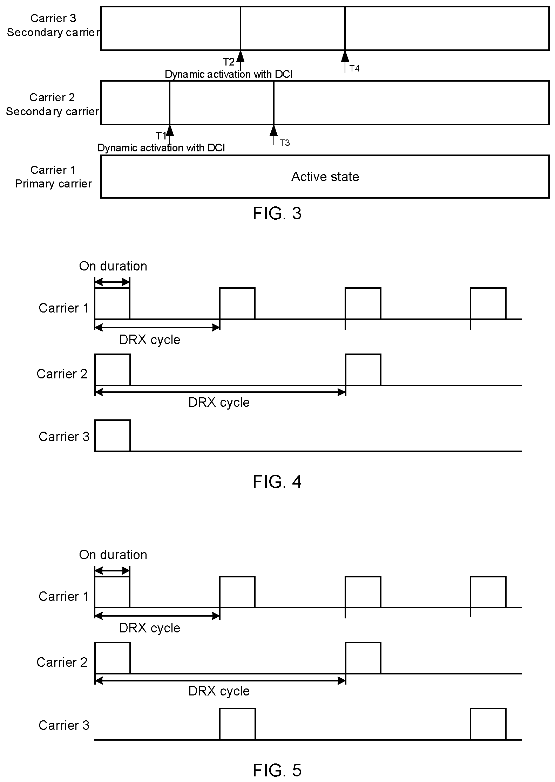

For example, as shown in FIG. 3, it is assumed that the network side is configured with three carriers, namely carrier 1, carrier 2, and carrier 3. The base station sends a configuration signaling to the terminal, and a bitmap contained in the configuration signaling includes three indication bits: a first indication bit, a second indication bit, and a third indication bit. These three indication bits correspond to the carrier 1, the carrier 2, and the carrier 3 in sequence. It is assumed that an indication bit is "0", then a carrier corresponding to the indication bit does not belong to the carrier combination configured by the base station for the terminal; if the indication bit is "1", then the carrier corresponding to the indication bit belongs to the carrier combination configured by the base station for the terminal. For example, if the bitmap in the DCI sent from the base station to the terminal at time T1 is "110", it means that carrier 1 and carrier 2 belong to the carrier combination configured by the base station for the terminal, and carrier 3 does not belong to the carrier combination configured by the base station for the terminal.

In some embodiments, a carrier to be monitored by the first node is determined based on the configuration information for the carrier combination.

In some embodiments, determining the carrier to be monitored by the first node based on the configuration information for the carrier combination includes at least one of the following:
determining the carrier to be monitored by the first node through comparing a number of carriers supported for monitoring by the first node with a number of carriers corresponding to the configuration information for the carrier combination;
determining the carrier to be monitored by the first node through comparing a number of carriers supported for monitoring by the first node with a number of carriers corresponding to the configuration information for the carrier combination determined by the configuration signaling received within a preset time duration; or
in response to that a number of carriers corresponding to the configuration information for the carrier combination determined by the configuration signaling is equal to a number of carriers corresponding to all carriers configured on a network side, determining the carrier to be monitored by the first node through comparing a number of carriers supported for monitoring by the first node with the number of carriers corresponding to all carriers configured on the network side.

In some embodiments, a number of carrier combinations determined by the configuration signaling is one or multiple. In a case where the number of carrier combinations determined is one, the carrier to be monitored by the first node is determined through comparing the number of carriers supported for monitoring by the first node with a number of carriers corresponding to the carrier combination; in a case where the number of carrier combinations determined is multiple, the carrier to be monitored by the first node is determined through comparing the number of carriers supported for monitoring by the first node with the number of carriers corresponding to one or more carrier combinations in the multiple carrier combinations.

For example, continue to refer to FIG. 3, the carrier combinations determined by the configuration signaling include a carrier combination 1 and a carrier combination 2. The carrier combination 1 includes a carrier 2 and a carrier 3, while the carrier combination 2 includes a carrier 1 and a carrier 3. The carrier to be monitored by the first node may be determined through comparing a number of carriers supported for monitoring by the first node with a total number of carriers included in the carrier combination 1. The carrier to be monitored by the first node may also be determined through comparing the number of carriers supported for monitoring by the first node with a total number of carriers included in the carrier combination 2. The carrier to be monitored by the first node may further be determined through comparing the number of carriers supported for monitoring by the first node with a number of carriers included in the carrier combination 1 and the carrier combination 2. Some determination manners may be determined in combination with actual communication scenarios or may be pre-configured.

As another example, continue to refer to FIG. 3, during a time duration from T1 to T2, the carrier combination determined by the received configuration signaling includes a carrier 1 and a carrier 2, with a corresponding number of carriers being 2; during a time duration from T2 to T3, the carrier combination determined by the received configuration signaling includes a carrier 1, a carrier 2, and a carrier 3, with a corresponding number of carriers being 3; during a time duration from T3 to T4, the carrier combination determined by the received configuration signaling includes a carrier 1 and a carrier 3, with a corresponding number of carriers being 2. The carrier to be monitored by the first node during the time duration from T1 to T2 may be determined by comparing the number of carriers corresponding to the configuration information for the carrier combination determined by the configuration signaling received during the time duration from T1 to T2 with the number of carriers supported for monitoring by the first node. The carrier to be monitored by the first node during the time duration from T2 to T3 may be determined by comparing the number of carriers corresponding to the configuration information for the carrier combination determined by the configuration signaling received during the time duration from T2 to T3 with the number of carriers supported for monitoring by the first node. The determination for the carrier to be monitored by the first node during the time duration from T3 to T4 and other time durations also adopts a similar manner as described above, which will not be repeated herein.

As another example, continue to refer to FIG. 3, the number of carriers corresponding to all carriers configured on the network side is 3, namely carrier 1, carrier 2, and carrier 3. Carrier corresponding to the configuration information for the carrier combination determined by the configuration signaling are also carrier 1, carrier 2, and carrier 3. The number of carriers corresponding to the configuration information for the carrier combination determined by the configuration signaling is equal to the number of carriers corresponding to all carriers configured on the network side. At this point, the carriers to be monitored by the first node may be determined through comparing the number of carriers supported for monitoring by the first node with the number of carriers corresponding to all carriers configured on the network side.

In a case where the number of carriers supported for monitoring by the first node is unknown, the carriers to be monitored by the first node may be determined by combining the methods in the embodiments.

It can be understood that in some technologies, when configuring a carrier combination in a semi-static manner, the carrier to be monitored by the first node is determined through comparing the number of carriers supported for monitoring by the first node with the number of carriers included in the carrier combination configured on the network side in the semi-static manner. When the number of carriers supported by the first node for monitoring is equal to or different from the number of carriers included in the carrier combination configured on the network side in the semi-static manner, how the first node selects the carrier to be monitored has been specified in the standards. Due to the dynamic configuration for carrier combinations in the present disclosure, using these technologies to determine the carrier to be monitored by the first node may result in significant errors and power consumption. Therefore, in the present disclosure, the carrier to be monitored by the first node is determined based on the configuration information for the carrier combination determined by the configuration signaling. By comparing the number of carriers supported for monitoring by the first node with the number of dynamically configured carriers, it achieves timely and accurate determination of the carrier to be monitored by the first node when dynamically configuring the carrier combination.

In some embodiments, a size of a HARQ codebook is determined based on the configuration information for the carrier combination.

In some embodiments, determining the size of the HARQ codebook based on the configuration information for the carrier combination includes at least one of the following:
determining the size of the HARQ codebook based on a number of carriers corresponding to the configuration information for the carrier combination;
determining the size of the HARQ codebook based on a number of carriers corresponding to the configuration information for the carrier combination determined by the configuration signaling received within a preset time duration; or
in response to that a number of carriers corresponding to the configuration information for the carrier combination determined by the configuration signaling is equal to a number of carriers corresponding to all carriers configured on a network side, determining the size of the HARQ codebook based on the number of carriers corresponding to all carriers configured on the network side.

It can be understood that in some technologies, there are three types for a hybrid automatic repeat request (HARQ) codebook that indicates whether channel transmission is correct: type 1, type 2, and type 3. A codebook size of a HARQ codebook in type 1 and a codebook size of a HARQ codebook in type 3 is determined based on a number of carriers included in a CA combination (carrier combination) configured on the network side in the semi-static manner. Due to the dynamic configuration for carrier combinations in the present disclosure, using these technologies to determine the size of the HARQ codebook may result in significant errors and power consumption. Therefore, in the present disclosure, the size of the HARQ codebook for the first node is determined based on the configuration information for the carrier combination determined by the configuration signaling, thus the size of the HARQ codebook may be determined timely and accurately.

In some embodiments, the configuration information for the carrier combination includes frequency domain resource allocation information.

In some embodiments, a determination manner for the frequency domain resource allocation information includes at least one of the following:
configuring the frequency domain resource allocation information based on a frequency domain resource formed by merging all secondary carriers in the carrier combination; or
configuring the frequency domain resource allocation information based on a frequency domain resource formed by merging all secondary carriers in a carrier combination pattern.

In some embodiments, the carrier combination pattern is configured based on a semi-static signaling.

For example, scheduling manners of a single carrier and collaboration with a plurality of carriers are combined. A plurality of secondary carriers are configured into a super single carrier, a frequency domain resource is a sum of frequency domain resources of the plurality of secondary carriers within the super single carrier. Scheduling information (i.e., frequency domain resource allocation (FDRA)) is sent via a primary carrier through a DCI dynamic indication. As shown in FIG. 3, the carrier 2 and the carrier 3 form a super single carrier, and a frequency domain resource is a sum of all frequency domains of the carrier 2 and the carrier 3. The scheduling information is sent via carrier 1.

For example, scheduling manners of a single carrier and collaboration with a plurality of carrier combination patterns are combined. A carrier combination pattern is configured through a semi-static signaling, and a frequency domain resource is a sum of frequency domain resources of all carriers within the carrier combination pattern. A carrier combination pattern may be divided according to the time domain, i.e., a carrier combination pattern corresponding to a cycle or N slots or N sub frames. N is an integer greater than 0. Furthermore, the scheduling information, including FDRA, is sent via the primary carrier through a DCI dynamic indication.

It can be understood that the configuration information for the carrier combination determined by the configuration signaling may be determined by combining different methods in the above embodiments, or by selecting different methods in different embodiments at different time points.

In some embodiments, the configuration signaling is further configured to determine a physical downlink control channel (PDCCH) to be monitored.

In some embodiments, a determination manner for the PDCCH to be monitored includes at least one of the following:
the configuration signaling being used to indicate PDCCHs to be monitored on all secondary carriers in the carrier combination; or
the configuration signaling being used to indicate PDCCHs to be monitored on secondary carriers within all active time durations in the carrier combination.

In some embodiments, in a case where the configuration signaling is used to indicate the PDCCHs to be monitored on secondary carriers within all active time durations in the carrier combination, the first node may only monitor a PDCCH corresponding to a starting time of a secondary carrier active state.

In some embodiments, the configuration signaling is carried on a primary carrier in the carrier combination.

When a resource occupied by a PDCCH configured on a secondary carrier is not used for transmitting the PDCCH, the resource may be used to transmit a physical downlink shared channel (PDSCH) or other downlink channels or downlink signals. In this way, the resource utilization efficiency may be improved.

In this way, with the further development of mobile communication technology, it is very likely that all terminals are capable of supporting the CA technology, but due to the simultaneous operation of a plurality of carriers, power consumption is high for a terminal. By reducing a monitoring frequency for a PDCCH, the power consumption for a terminal may be reduced.

In some embodiments, the configuration information for the carrier combination determined by the configuration signaling is discontinuous reception (DRX) configuration information.

In some embodiments, the configuration signaling includes a radio resource control (RRC) signaling.

In some embodiments, different DRX configuration information for different carriers in the carrier combination determined by the configuration signaling includes at least one of the following:
an on duration corresponding to a secondary carrier in the carrier combination being aligned with an on duration corresponding to a primary carrier in time domain; or
a number of carriers in the carrier combination that are simultaneously in on durations not exceeding a preset number.

In some embodiments, carriers in the carrier combination are in an active state during the on duration. If no PDCCH is received during this time duration, the terminal may enter a DRX dormant state until a next 'on duration' begins.

For example, FIG. 4 provides a schematic diagram of a carrier combination, the carrier combination includes a carrier 1, a carrier 2, and a carrier 3. The carrier 1, the carrier 2, and the carrier 3 respectively correspond to different DRX patterns, that is, states of the carrier 1, the carrier 2, and the carrier 3 may be different at different time points. It is assumed the carrier 1 is a primary carrier, the carrier 2 and the carrier 3 are secondary carriers, an on duration corresponding to the carrier 2 and the carrier 3 is aligned with an on duration corresponding to the carrier 1 in the time domain. And only a terminal that is in an active state within the on duration may monitor a PDCCH. If no PDCCH is received within the on duration, the terminal may enter a DRX dormant state.

As another example, FIG. 5 provides a schematic diagram of a carrier combination, and the carrier combination includes a carrier 1, a carrier 2, and a carrier 3. The carrier 1, the carrier 2, and the carrier 3 respectively correspond to different DRX patterns, and a number of carriers in the carrier combination that are simultaneously in the on duration does not exceed 2.

In this way, with the further development of mobile communication technology, it is very likely that all terminals are capable of supporting the CA technology, but due to the simultaneous operation of a plurality of carriers, power consumption is high for a terminal. By designing DRX patterns, the power consumption for the terminal may be reduced.

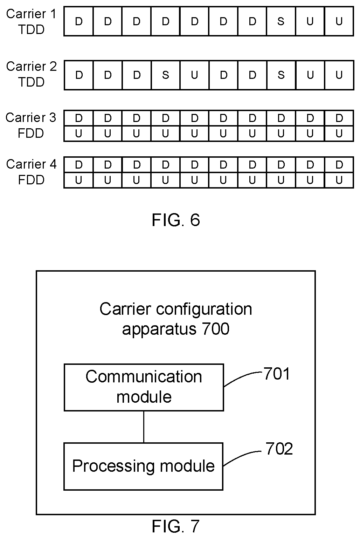

In some embodiments, as shown in FIG. 6, there are a total of four carriers on the network side. A carrier 1 and a carrier 2 are time division duplexing (TDD) carriers with large frequency domain bandwidth, while a carrier 3 and a carrier 4 are frequency division duplex (FDD) carriers with small frequency domain bandwidth. A TDD carrier is used to transmit a channel in type 1, and a FDD carrier is used to transmit a channel in type 2. A channel in type 1 may be a PDCCH, physical uplink control channel (PUCCH) channel, or other channels other than a service channel; a channel in type 2 may be a PDSCH or a physical uplink shared channel (PUSCH). CA combinations on the network side may be divided according to channel types.

In S102, the first node and the second node perform multi-carrier communication based on the configuration information for the carrier combination.

Based on this, based on different channel states, the second node may send different configuration signals to the first node in a timely manner, so that the first node and the second node are capable of performing the multi-carrier communication based on the configuration information for different carrier combinations determined by different configuration signals, achieving dynamic configuration for carrier combinations, thus to match the actual channel state and improve the communication efficiency.

At present, in CA, UE transmission power under CA is only considered as a transmission power of a sum of transmission power for each cell and the whole carrier combination. When introducing dynamic configuration for carrier combinations, the method for defining the transmission power of the terminal may be at least one of the following.

Method 1: A transmission power of each carrier.

Method 2: A transmission power of each carrier combination, that is, the transmission power is defined/reported based on the carrier combination mentioned in the above embodiments.

In some embodiments, in the current mobile communication system standards, a maximum number of continuous or discontinuous carrier combinations within the same carrier frequency, as well as a maximum number of carrier combinations within different carrier frequencies are defined. So in future mobile communication systems, a capability corresponding to multiple carriers may be at least one of the following.

Method 1: A maximum number of carriers. The maximum number of carriers (whether within the same carrier frequency or different carriers) shall be uniformly defined.

Method 2: A maximum number of carriers between different carrier frequencies. That is, only a single carrier is supported within the same carrier frequency; or the number of carriers within the same carrier frequency is not limited, and only the maximum number of carriers between different carrier frequencies is defined.

Furthermore, multiple carriers within the same carrier frequency may be merged into one carrier.

Method 3: The maximum number of carriers within the same carrier frequency and the maximum number of carriers between different carrier frequencies are defined.

Furthermore, the maximum number of carriers within the same carrier frequency is only applicable to a bandwidth part, for example, is defined only for new frequency bands or terahertz frequency bands, or only for existing frequency bands.

The solutions provided in the embodiments of the present disclosure are introduced above from the perspective of methods. A carrier configuration apparatus is further shown below, and the carrier configuration apparatus is configured to perform the carrier configuration method in any of the above-mentioned embodiments and possible implementations thereof.

It could be understood that, in order to implement the carrier configuration method, the carrier configuration apparatus includes corresponding hardware structures and/or software modules for implementing various functions. Those skilled in the art should easily realize that the present disclosure may be implemented in the form of hardware or a combination of hardware and computer software in combination with algorithms and steps described in the embodiments of the present disclosure. Whether a certain functionality is implemented by hardware or by computer software driving hardware depends on the specific application and design constraint conditions of the technical solutions. A professional technician may use different methods to implement the described functions for each specific application, but such implementation should not be considered beyond the scope of the present disclosure.

The carrier configuration apparatus may be divided into functional modules according to the above-mentioned method embodiments respectively in the embodiments of the present disclosure. For example, each functional module may be divided corresponding to each function, or two or more functions may be integrated into one functional module. The above-mentioned integrated module may implemented in the form of hardware, or may be implemented in the form of software. It should be noted that the division of the modules in the embodiments of the present disclosure is illustrated, which is only a logical functional division, and there may be other division manners in an actual implementation. The following is illustrated by adopting a division of each functional module corresponding to each function as an example.

FIG. 7 is a structural schematic diagram of a carrier configuration apparatus provided in the embodiments of the present disclosure, which is applied to a first node. The carrier configuration apparatus 700 includes: a communication module 701 and a processing module 702.

The communication module 701 is configured to receive a configuration signaling, where the configuration signaling is used to determine configuration information for a carrier combination.

The communication module 701 is further configured to perform multi-carrier communication based on the configuration information for the carrier combination.

In some embodiments, the configuration signaling includes downlink control information (DCI).

In some embodiments, the configuration signaling includes a bitmap, the bitmap includes a plurality of indication bits, each indication bit corresponds to a carrier, and each indication bit is used to indicate whether a carrier corresponding to the indication bit belongs to the carrier combination.

In some embodiments, the processing module 702 is configured to determine a carrier to be monitored by the first node based on the configuration information for the carrier combination.

In some embodiments, determining the carrier to be monitored by the first node based on the configuration information for the carrier combination includes at least one of the following: determining the carrier to be monitored by the first node through comparing a number of carriers supported for monitoring by the first node with a number of carriers corresponding to the configuration information for the carrier combination; determining the carrier to be monitored by the first node through comparing a number of carriers supported for monitoring by the first node with a number of carriers corresponding to the configuration information for the carrier combination determined by the configuration signaling received within a preset time duration; or in response to that a number of carriers corresponding to the configuration information for the carrier combination determined by the configuration signaling is equal to a number of carriers corresponding to all carriers configured on a network side, determining the carrier to be monitored by the first node through comparing a number of carriers supported for monitoring by the first node with the number of carriers corresponding to all carriers configured on the network side.

In some embodiments, the processing module 702 is further configured to determine a size of a HARQ codebook based on the configuration information for the carrier combination.

In some embodiments, determining the size of the HARQ codebook based on the configuration information for the carrier combination includes at least one of the following: determining the size of the HARQ codebook based on a number of carriers corresponding to the configuration information for the carrier combination; determining the size of the HARQ codebook based on a number of carriers corresponding to the configuration information for the carrier combination determined by the configuration signaling received within a preset time duration; or in response to that a number of carriers corresponding to the configuration information for the carrier combination determined by the configuration signaling is equal to a number of carriers corresponding to all carriers configured on a network side, determining the size of the HARQ codebook based on the number of carriers corresponding to all carriers configured on the network side.

In some embodiments, the configuration information for the carrier combination includes frequency domain resource allocation information.

In some embodiments, a determination manner for the frequency domain resource allocation information includes at least one of the following: configuring the frequency domain resource allocation information based on a frequency domain resource formed by merging all secondary carriers in the carrier combination; or configuring the frequency domain resource allocation information based on a frequency domain resource formed by merging all secondary carriers in a carrier combination pattern.

In some embodiments, the carrier combination pattern is configured based on a semi-static signaling.

In some embodiments, the configuration signaling is further configured to determine a physical downlink control channel (PDCCH) to be monitored.

In some embodiments, a determination manner for the PDCCH to be monitored includes at least one of the following: the configuration signaling being used to indicate PDCCHs to be monitored on all secondary carriers in the carrier combination; or the configuration signaling being used to indicate PDCCHs to be monitored on secondary carriers within all active time durations in the carrier combination.

In some embodiments, the configuration signaling is carried on a primary carrier in the carrier combination.

In some embodiments, the configuration information for the carrier combination determined by the configuration signaling is DRX configuration information.

In some embodiments, the configuration signaling includes a radio resource control (RRC) signaling.

In some embodiments, different DRX configuration information for different carriers in the carrier combination determined by the configuration signaling includes at least one of the following: an on duration corresponding to a secondary carrier in the carrier combination being aligned with an on duration corresponding to a primary carrier in time domain; or a number of carriers in the carrier combination that are simultaneously in on durations not exceeding a preset number.

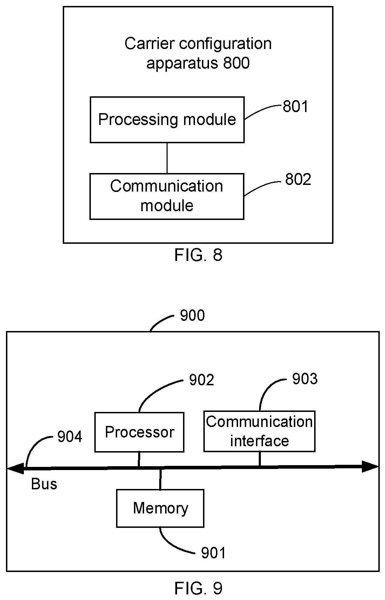

FIG. 8 is a structural schematic diagram of a carrier configuration apparatus provided in the embodiments of the present disclosure, which is applied to a second node. The carrier configuration apparatus 800 includes: a processing module 801 and a communication module 802.

The processing module 801 is configured to generate a configuration signaling, where the configuration signaling is used to determine configuration information for a carrier combination.

The communication module 802 is configured to send the configuration signaling.

The communication module 802 is further configured to perform multi-carrier communication based on the configuration information for the carrier combination.

The contents contained in the configuration signaling, the contents involved in the configuration information for the carrier combination, and other possible contents may refer to the description for the carrier configuration apparatus on the first node side.

In a case where the functions of the above-mentioned integrated modules are implemented in the form of hardware, a structure of a communication apparatus is further provided in the embodiments of the present disclosure, and the communication apparatus is configured to perform the carrier configuration method provided in the embodiments of the present disclosure. As shown in FIG. 9, the communication apparatus 900 includes: a memory 901, a processor 902, a communication interface 903, and a bus 904.

The memory 901 may be a read-only memory (ROM) or other types of static storage devices that can store static information and instructions, a random access memory (RAM), or other types of dynamic storage devices that can store dynamic information and instructions, or an electrically erasable programmable read-only memory (EEPROM), a magnetic disk storage medium or any other magnetic storage devices, or any other medium that can be used to carry or store desired program codes with a form of instructions or data and can be accessed by a computer, which is not limited thereto.

The processor 902 may implement or perform various exemplary logical blocks, modules and circuits described in combination with the embodiments of the present disclosure. The processor 902 may be a central processor, a general-purpose processor, a digital signal processor, an application specific integrated circuit, a field programmable gate array, or other programmable logic component, a transistor logic component, a hardware assembly, or any combination thereof. The processor 902 may implement or execute various illustrative logical blocks, modules and circuits described in conjunction with the embodiments of the present disclosure. The processor 902 may also be a combination that implements computing functions, for example, the processor 902 includes a combination of one or more microprocessors, a combination of a DSP (digital signal processor) and a microprocessor, or the like.

The communication interface 903 is configured to connect to other devices through a communication network. The communication network may be the Ethernet, a radio access network, a wireless local area network (WLAN), or the like.

In some embodiments, the memory 901 may exist independently from the processor 902, and the memory 901 may be connected to the processor 902 through the bus 904 for storing instructions or program codes. In a case where the processor 902 invokes and executes instructions or program codes stored in the memory 901, the carrier configuration method provided in the embodiments of the present disclosure may be implemented.

In embodiments, the memory 901 may be integrated with the processor 902.

The bus 904 may be an extended industry standard architecture (EISA) bus, or the like. The bus 904 may be classified as an address bus, a data bus, a control bus, or the like. For ease of representation, only one bold line is used in FIG. 9 for representing the bus 904, but it does not mean that there is only one bus or one type of bus.

A computer-readable storage medium (for example, a non-transitory computer-readable storage medium) is provided in some embodiments of the present disclosure, the computer-readable storage medium has stored computer program instructions, and the computer program instructions, upon being executed by a computer, enable the computer to perform the carrier configuration method as described in any one of the above embodiments.

In an exemplary implementation, the computer may be the communication apparatus described above, and a form of the computer is not limited in the present disclosure.

In some examples, the above-mentioned computer-readable storage medium may include, but not limited to: a magnetic storage device (e.g., a hard disk, a floppy disk, or a magnetic tape, etc.), an optical disk (e.g., a compact disk (CD), a digital versatile disk (DVD), etc.), a smart card and a flash memory device (e.g., an erasable programmable read-only memory (EPROM), a card, a stick or a key driver, etc.). The various computer-readable storage media described in the present disclosure may represent one or more devices for storing information and/or other machine-readable storage medium for storing information. The term "machine-readable storage medium" may include, but not limited to, a wireless channel and various other media capable of storing, containing, and/or carrying instructions and/or data.

A computer program product including instructions is provided in the embodiments of the present disclosure, when the computer program product is run on a computer, the computer is enabled to perform the carrier configuration method as described in any one of the above-mentioned embodiments.

The above descriptions are merely specific implementations of the present disclosure, but the scope of protection of the present disclosure is not limited thereto; any variations or replacements within the technical scope disclosed in the present disclosure shall fall within the protection scope of the present disclosure. Therefore, the protection scope of the present disclosure shall be subject to the protection scope of the claims.

## Claims

1. A carrier configuration method, applied to a first node, wherein the method comprises:
receiving a configuration signaling, wherein the configuration signaling is used to determine configuration information for a carrier combination; and
performing multi-carrier communication based on the configuration information for the carrier combination.

2. The method according to claim 1, wherein the configuration signaling comprises downlink control information (DCI).

3. The method according to claim 2, wherein the configuration signaling comprises a bitmap, the bitmap comprises a plurality of indication bits, each indication bit corresponds to a carrier, and each indication bit is used to indicate whether a carrier corresponding to the indication bit belongs to the carrier combination.

4. The method according to claim 1, further comprising:
determining a carrier to be monitored by the first node based on the configuration information for the carrier combination.

5. The method according to claim 4, wherein determining the carrier to be monitored by the first node based on the configuration information for the carrier combination comprises at least one of the following:
determining the carrier to be monitored by the first node through comparing a number of carriers supported for monitoring by the first node with a number of carriers corresponding to the configuration information for the carrier combination;
determining the carrier to be monitored by the first node through comparing a number of carriers supported for monitoring by the first node with a number of carriers corresponding to the configuration information for the carrier combination determined by the configuration signaling received within a preset time duration; or
in response to that a number of carriers corresponding to the configuration information for the carrier combination determined by the configuration signaling is equal to a number of carriers corresponding to all carriers configured on a network side, determining the carrier to be monitored by the first node through comparing a number of carriers supported for monitoring by the first node with the number of carriers corresponding to all carriers configured on the network side.

6. The method according to claim 1, further comprising:
determining a size of a HARQ codebook based on the configuration information for the carrier combination.

7. The method according to claim 6, wherein determining the size of the HARQ codebook based on the configuration information for the carrier combination comprises at least one of the following:
determining the size of the HARQ codebook based on a number of carriers corresponding to the configuration information for the carrier combination;
determining the size of the HARQ codebook based on a number of carriers corresponding to the configuration information for the carrier combination determined by the configuration signaling received within a preset time duration; or
in response to that a number of carriers corresponding to the configuration information for the carrier combination determined by the configuration signaling is equal to a number of carriers corresponding to all carriers configured on a network side, determining the size of the HARQ codebook based on the number of carriers corresponding to all carriers configured on the network side.

8. The method according to claim 1, wherein the configuration information for the carrier combination further comprises frequency domain resource allocation information.

9. The method according to claim 8, wherein a determination manner for the frequency domain resource allocation information comprises at least one of the following:
configuring the frequency domain resource allocation information based on a frequency domain resource formed by merging all secondary carriers in the carrier combination; or
configuring the frequency domain resource allocation information based on a frequency domain resource formed by merging all secondary carriers in a carrier combination pattern.

10. The method according to claim 9, wherein the carrier combination pattern is configured based on a semi-static signaling.

11. The method according to claim 1, wherein the configuration signaling further comprises determining a physical downlink control channel (PDCCH) to be monitored.

12. The method according to claim 11, wherein a determination manner for the PDCCH to be monitored comprises at least one of the following:
the configuration signaling being used to indicate PDCCHs to be monitored on all secondary carriers in the carrier combination; or
the configuration signaling being used to indicate PDCCHs to be monitored on secondary carriers within all active time durations in the carrier combination.

13. The method according to claim 12, wherein the configuration signaling is carried on a primary carrier in the carrier combination.

14. The method according to claim 1, wherein the configuration information for the carrier combination determined by the configuration signaling is DRX configuration information.

15. The method according to claim 14, wherein the configuration signaling comprises a radio resource control (RRC) signaling.

16. The method according to claim 14, wherein different DRX configuration information for different carriers in the carrier combination determined by the configuration signaling comprises at least one of the following:
an on duration corresponding to a secondary carrier in the carrier combination being aligned with an on duration corresponding to a primary carrier in time domain; or
a number of carriers in the carrier combination that are simultaneously in on durations not exceeding a preset number.

17. A carrier configuration method, applied to a second node, wherein the method comprises:
sending a configuration signaling, wherein the configuration signaling is used to determine configuration information for a carrier combination; and
performing multi-carrier communication based on the configuration information for the carrier combination.

18. The method according to claim 17, wherein the configuration signaling comprises downlink control information (DCI).

19. The method according to claim 18, wherein the configuration signaling comprises a bitmap, the bitmap comprises a plurality of indication bits, each indication bit corresponds to a carrier, and each indication bit is used to indicate whether a carrier corresponding to the indication bit belongs to the carrier combination.

20. The method according to claim 17, wherein the configuration information for the carrier combination comprises frequency domain resource allocation information.

21. The method according to claim 20, wherein a determination manner for the frequency domain resource allocation information comprises at least one of the following:
configuring the frequency domain resource allocation information based on a frequency domain resource formed by merging all secondary carriers in the carrier combination;
configuring the frequency domain resource allocation information based on a frequency domain resource formed by merging all secondary carriers in a carrier combination pattern.

22. The method according to claim 21, wherein the carrier combination pattern is configured based on a semi-static signaling.

23. The method according to claim 17, wherein the configuration signaling is further used to determine a physical downlink control channel (PDCCH) to be monitored.

24. The method according to claim 23, wherein a determination manner for the PDCCH to be monitored comprises at least one of the following:
the configuration signaling being used to indicate PDCCHs to be monitored on all secondary carriers in the carrier combination; or
the configuration signaling being used to indicate PDCCHs to be monitored on secondary carriers within all active time durations in the carrier combination.

25. The method according to claim 24, wherein the configuration signaling is carried on a primary carrier in the carrier combination.

26. The method according to claim 17, wherein the configuration information for the carrier combination determined by the configuration signaling is DRX configuration information.

27. The method according to claim 26, wherein the configuration signaling comprises a radio resource control (RRC) signaling.

28. The method according to claim 26, wherein different DRX configuration information for different carriers in the carrier combination determined by the configuration signaling comprises at least one of the following:
an on duration corresponding to a secondary carrier in the carrier combination being aligned with an on duration corresponding to a primary carrier in time domain; or
a number of carriers in the carrier combination that are simultaneously in on durations not exceeding a preset number.

29. A communication apparatus, comprising: a memory and a processor, wherein the memory is coupled to the processor, the memory is configured to store instructions executable for the processor, and the processor is configured, upon the instructions being executed, to perform the carrier configuration method according to any one of claims 1 to 28.

30. A computer-readable storage medium, wherein computer instructions are stored on the computer-readable storage medium, in response that the computer instructions are executed on a communication apparatus, the communication apparatus is enabled to perform the carrier configuration method according to any one claims 1 to 28.
